# EUROPÄISCHE PATENTSCHRIFT

(11) **EP 3 538 853 B1**
(45) Veröffentlichungstag und Bekanntmachung des Hinweises auf die Patenterteilung: **06.09.2023**
(21) Anmeldenummer: 17800804.1
(22) Anmeldetag: 10.11.2017
(51) Int. Cl.: G01H 1/12, G01M 13/02

(54) **SCHWINGUNGSANALYSEGERÄT FÜR EINE SCHWINGMASCHINE UND VERFAHREN ZUR SCHWINGUNGSDARSTELLUNG**
VIBRATION ANALYSIS DEVICE FOR A VIBRATION MACHINE AND METHOD FOR VIBRATION REPRESENTATION
APPAREIL D'ANALYSE DE VIBRATIONS POUR MACHINE À VIBRATIONS ET PROCÉDÉ DE REPRÉSENTATION DE VIBRATIONS

(30) Priorität: 11.11.2016 DE 102016013404
(43) Veröffentlichungstag der Anmeldung: 18.09.2019
(73) Patentinhaber: Sandvik Mining and Construction Deutschland GmbH, 40549 Düsseldorf (DE)
(72) Erfinder: DINGEL, Carsten, 64832 Babenhausen (DE)
(74) Vertreter: WSL Patentanwälte Partnerschaft mbB
(86) Internationale Anmeldenummer: PCT/EP2017/078849
(87) Internationale Veröffentlichungsnummer: WO 2018/087274

(56) Entgegenhaltungen:
- US-A1- 2016 086 455
- US-A1- 2016 129 182
- US-A1- 2016 301 991
- US-B1- 6 257 066

## Beschreibung

Die Erfindung betrifft ein Schwingungsanalysegerät mit einer Anbringvorrichtung zur Analyse des Verhaltens einer Schwingmaschine, insbesondere eines Schwingförderers oder Schwingsiebs. Ferner betrifft die Erfindung ein Verfahren zum Anzeigen schwingungsbedingter Ausgabeinformationen für eine Analyse des Verhaltens einer Schwingmaschine, insbesondere eines Schwingförderers oder Schwingsiebs. Weiterhin betrifft die Erfindung ein Computerprogramm zum Ausführen von bestimmten Schritten, die auf einem Computersystem ablaufen. Solch ein Computerprogramm wird allerdings im Rahmen der Erfindung nicht beansprucht.

Aus dem Stand der Technik ist bereits eine sogenannte Stroke Card bekannt, die verwendet wird, um das Schwingverhalten einer Schwingmaschine, insbesondere eines Schwingförderers oder Schwingsiebs, zu beurteilen. Die Stroke Card ist als (Papier-)Karte ausgebildet, die an einer Schwingmaschine, insbesondere Schwingförderer oder Schwingsieb und dort üblicherweise an einer Seitenwange befestigbar ist. Ein Stift wird so angeordnet, dass seine Spitze auf der Stroke Card aufsetzt und an seiner Kontaktstelle zur Stroke Card eine Markierung aufbringt. Anhand der Markierungen, die im Betrieb der Schwingmaschine aufgezeichnet werden, sind Rückschlüsse auf das Schwingungsverhalten ziehbar.

Auch gibt es verschiedene Messsysteme, die so ausgelegt sind, dass sie mit Hilfe abgesetzter Sensoren ein Maschinenverhalten messen und analysieren.

Daneben gibt es bereits eine Software-Applikation Vibroscope für Endgeräte mit einem iOS-Betriebssystem, die ausgelegt ist, um die Höhe von Vibrationen zu messen und sie zu analysieren. Über einen Beschleunigungssensor werden Niederfrequenzvibrationen in Echtzeit gemessen und visualisiert ausgegeben. Die Beschleunigungswerte können als numerische Werte, in Wellenform in Abhängigkeit von der Zeit und als Zweiachsenvektoren angezeigt werden. Mittels schneller FourierTransformation können die Schwingungen ausgewertet werden. Die Applikation ist ausgelegt, um Schwingungen und Beschleunigungen eines Automobils und seiner Komponenten oder eines Zugs zu messen, oder um das Gleichgewicht eines schwingenden Körpers zu prüfen. Gerade die Realisierung dieser älteren Idee hat sich selbst in dem Bereich, für den sie vorgesehen ist, nämlich im Bereich eines Kraftfahrzeugs, nicht bewährt.

Das Dokument US 2016/129182 A1 offenbart ein System entsprechend des Oberbegriffs des Anspruchs 1 sowie ein Verfahren zur Analyse von Schwingungen nach dem Oberbegriff des Anspruchs 3.

Der Stand der Technik hat darüber hinaus jedoch immer den Nachteil, dass bei der Anbringung einer Stroke Card oder eines Messsystems peinlichst auf die Ausrichtung geachtet werden muss, damit die Ergebnisse richtig beurteilt werden können. Außerdem können bisher nicht alle die Schwingung charakterisierenden Parameter vollständig ermittelt und dargestellt werden.

Es ist also die Aufgabe der Erfindung, die Nachteile aus dem Stand der Technik zu vermeiden oder wenigstens zu mildern. Insbesondere sollen alle Informationen bezüglich der Schwingungen der Schwingmaschine, insbesondere des Schwingförderers oder Schwingsiebs, mit einfachen Mitteln und kostengünstig ermittelt werden. Sie sollen ferner speicherbar sein, damit sie weiterverarbeitet und archiviert werden können. Zudem ist es die Aufgabe der Erfindung, die Schwingungsdaten möglichst unabhängig von der Anbringungsausrichtung bewerten zu können.

Diese Aufgabe wird bei einer gattungsgemäßen Vorrichtung erfindungsgemäß durch ein System nach Anspruch 1 gelöst.

Der Sensor kann die auf Messdaten beruhenden Daten hierbei kabellos an eine Recheneinheit übertragen. Dies hat den Vorteil, dass außer dem Sensor keine weiteren Geräte an der Schwingmaschine, insbesondere dem Schwingförderer oder Schwingsieb befestigt werden müssen.

Dies hat den Vorteil, dass nun aussagekräftige Informationen über das Schwingverhalten der Schwingmaschine, insbesondere des Schwingförderers oder Schwingsiebs bereitgestellt werden, die zur weiteren technischen Untersuchung verwendet werden können. Dadurch dass die Recheneinheit und der Sensor mit der Anbringvorrichtung gekoppelt sind und direkt an der Schwingmaschine, insbesondere dem Schwingförderer oder Schwingsieb befestigt werden, ist keine penible Ausrichtung der Schwingungsanalyse nötig. Der Sensor berechnet bei der erfindungsgemäßen Lösung automatisch die horizontale Bezugsebene und stellt die Schwingungen sowohl in Relation zur Bezugsebene als auch in Relation zu der Ebene, in der der Sensor angebracht wird, dar.

Vorteilhafte Ausführungsformen sind in den Unteransprüchen beansprucht und werden nachfolgend näher erläutert.

So ist es von Vorteil, wenn die Anbringvorrichtung als Hülle, Gehäuse oder (Winkel-) Platte ausgebildet ist. Dadurch kann die Anbringvorrichtung einfach und besonders kostengünstig gefertigt werden. Auch ist es möglich bereits vorhandene Hüllen so um eine Vorrichtung zu erweitern, dass sie an dem Gehäuse einer Schwingmaschine, insbesondere eines Schwingförderers oder Schwingsiebs befestigt werden können.

Zudem ist es zweckmäßig, wenn die Recheneinheit in der Hülle oder in dem Gehäuse oder an der (Winkel-) Platte bevorzugterweise lösbar befestigt ist. So können die Recheneinheit und die Anbringvorrichtung getrennt hergestellt und verwendet werden. Daher kann eine Anbringvorrichtung auch für mehrere Recheneinheiten verwendet werden und eine bestehende Recheneinheit kann durch Kopplung mit der Anbringvorrichtung ohne großen zusätzlichen konstruktiven Aufwand an der Schwingmaschine, insbesondere dem Schwingförderer oder Schwingsieb befestigt werden.

Weiterhin zeichnet sich ein günstiges Ausführungsbeispiel dadurch aus, dass die Recheneinheit als Smartphone oder Tablet ausgebildet ist. Viele potentielle Benutzer sind in dem Umgang mit Smartphones und/oder Tablets vertraut, so dass die Bedienbarkeit des Schwingungsanalysegeräts hoch ist und kein hoher Schulungsaufwand und/oder keine ausführlichen Beschreibungen notwendig sind. Außerdem fallen nur sehr geringe Fertigungskosten beziehungsweise kaum zusätzliche Anschaffungskosten an, da bei vielen potentiellen Benutzer bereits ein Smartphone und/oder Tablet vorhanden ist, das durch eine Installation einer Software-Applikation und durch Koppelung mit der Anbringvorrichtung als das Schwingungsanalysegerät fungiert. Da potentielle Benutzer oftmals ein Smartphone und/oder Tablet ständig bei sich führen, ist das Schwingungsanalysegerät dann , wenn benötigt, immer griffbereit.

Zusätzlich ist es vorteilhaft, wenn das Mittel zur Befestigung der Anbringvorrichtung an dem Gehäuse der Schwingmaschine, insbesondere dem Schwingförderer oder Schwingsieb als einen Formschluss und / oder einen Kraftschluss hervorrufende Vorrichtung ausgebildet ist. So kann vorzugsweise ein fester Sitz der Recheneinheit und des Sensors an der Schwingmaschine, insbesondere dem Schwingförderer oder Schwingsieb gewährleistet werden, der nicht die Beurteilbarkeit des Schwingverhaltens einschränkt oder verringert.

Ferner sind bevorzugterweise eine oder mehrere Vorrichtungen zum Verklemmen und / oder magnetischen Anbringen und / oder Verkleben ausgelegt. Dadurch kann das Schwingungsanalysegerät fest an dem Gehäuse der Schwingmaschine, insbesondere dem Schwingförderer oder Schwingsieb angebracht werden, ohne dass eine zusätzliche Vorrichtung auf Seiten des Gehäuses der Schwingmaschine, insbesondere dem Schwingförderer oder Schwingsieb vorhanden ist. Auch kann das Schwingungsanalysegerät so an mehreren verschiedenen Stellen einfach und insbesondere lösbar angebracht werden.

Außerdem ist es von Vorteil, wenn der Sensor zum Erfassen wenigstens eines Parameters aus der Gruppe: Bewegungsrichtung, Position, Geschwindigkeit, Beschleunigung und Weg ausgelegt ist. Gerade diese Parameter bieten sich an, da sie aussagekräftig das Schwingungsverhalten charakterisieren und da aus diesen Parametern weitere beurteilungsrelevante Parameter errechnet werden können.

Zudem ist es günstig, wenn die Recheneinheit ausgelegt ist, um Daten zu erfassen und zu verarbeiten, so dass von der Anzeigeeinrichtung ein Winkel der Hauptschwingrichtung, der zurückgelegte Weg der Schwingmaschine, insbesondere des Schwingförderers oder Schwingsiebs, die Geschwindigkeit, die Beschleunigung, eine Schwingfrequenz, eine Abweichung von einer Soll-Schwingrichtung und / oder ein Bild eines Schwingungsverlaufs (über die Zeit) darstellbar ist. Dies hat zum Vorteil, dass durch diese aussagekräftigen Roh- und weiterverarbeiteten Daten einfach beurteilt werden kann, ob das Schwingungsverhalten der Schwingmaschine, insbesondere des Schwingförderers oder Schwingsiebs einem Sollverhalten entspricht oder von diesem abweicht. Da die Informationen nicht nur grafisch, sondern auch in numerischen Werten vorliegen, kann auch eine automatische Beurteilung des Schwingverhaltens getroffen werden.

Weiterhin ist es zweckmäßig, wenn die aufgearbeiteten Daten in Abhängigkeit der x-, y- und z-Achsen eines kartesischen Koordinatensystems getrennt voneinander und / oder als resultierender Vektor ausgegeben werden. Dadurch kann entweder der Gesamtbetrag und die Gesamtrichtung der Schwingung oder eine bestimmte Richtungskomponente der Schwingung ausgelesen werden.

Zusätzlich ist ein günstiges Ausführungsbeispiel dadurch gekennzeichnet, dass die Recheneinheit einen weiteren zur Erfassung der Umgebungstemperatur ausgelegten Sensor besitzt. Gerade bei zu hoher oder zu niedriger Umgebungstemperatur kann die Schwingmaschine, insbesondere der Schwingförderer oder das Schwingsieb zu Schaden kommen. Außerdem ist eine erhöhte Temperatur der Schwingmaschine selbst ein Indikator für eine Unregelmäßigkeit im Sollschwingverhalten. Deshalb ist es von Vorteil, die Temperatur an der Schwingmaschine regelmäßig zu überprüfen. Vorteilhafterweise ist in der Recheneinheit eine Sende- / Empfangseinheit zum Kommunizieren mit einem oder mehreren Peripheriegeräten vorhanden. Dadurch ist es möglich, die Anzeigeeinrichtung von der Recheneinheit zu entkoppeln und die Schwingungsdaten auch auf anderen Geräten ausgeben zu lassen. Außerdem können so die Daten automatisch auf ein externes Speichermedium übertragen und auf ihm gespeichert werden. Auch ist das Schwingungsanalysegerät durch die Sende- / Empfangseinheit ferngesteuert bedienbar und überwachbar, so dass ein Schwingungsprüfer nicht zwangsweise vor Ort sein muss. Zudem sind die Messungen synchronisierbar, so dass beispielsweise mehrere Schwingungsanalysegeräte an verschiedenen Punkten einer Schwingmaschine, insbesondere Schwingförderer oder Schwingsie, befestigt werden, die Daten synchronisiert ausgewertet werden und so eine Aussage über die Gesamtbewegung der Schwingmaschine, insbesondere des Schwingförderers oder Schwingsiebs getroffen werden kann.

Weiterhin betrifft die Erfindung ein Verfahren nach Anspruch 3 zum Anzeigen schwingungsbedingter Ausgabeinformationen für eine Analyse des Verhaltens einer Schwingmaschine.

So ist es von Vorteil, wenn die Daten zur Darstellung der schwingungsbedingten Ausgabeinformationen als Grafik oder als numerischer Wert ausgegeben werden. Dadurch kann das Schwingverhalten sowohl optisch beispielsweise durch einen Experten oder einen Vergleich mit einer Sollschwingungsgrafik als auch mathematisch beispielsweise durch einen Vergleich mit einem Toleranzbereich ausgewertet werden. Ferner ist es zweckmäßig, wenn die Daten wenigstens einen Parameter aus der Gruppe: Weg, Geschwindigkeit, Beschleunigung, Schwingfrequenz, Winkel der Hauptschwingrichtung, Abweichung zur Sollschwingrichtung und / oder ein Bild des Schwingungsverlaufs betreffen. Vorteilhafterweise klassifizieren diese Parameter eine Schwingung vollständig und aussagekräftig und aus ihnen lassen sich weitere Parameter berechnen.

Zudem ist ein günstiges Ausführungsbeispiel dadurch gekennzeichnet, dass die vom Sensor erfassten Daten und / oder die von der Recheneinheit aufbereiteten Daten an ein externes Peripheriegerät gesendet werden. Vorteilhafterweise können die Daten auf dem externen Peripheriegerät ausgegeben werden oder mit Daten anderer Schwingungsanalysegeräte synchronisiert werden. Dadurch können auch Aussagen über die Gesamtbewegung der Schwingmaschine, insbesondere Schwingförderer oder Schwingsieb einfach getroffen werden oder mit historischen Daten, die beispielsweise in einer Datenbank oder auf einem Speichermedium abgelegt sind, verglichen werden. Beispielweise können Bluetooth, LAN oder WLAN zum Kommunizieren mit dem Peripheriegerät genutzt werden.

Außerdem ist es vorteilhaft, wenn ein die Recheneinheit und den Sensor sowie die Anzeigeeinrichtung besitzendes Smartphone oder Tablet an der Anbringvorrichtung vor oder nach deren Befestigung mit dem Gehäuse der Schwingmaschine, insbesondere Schwingförderer oder Schwingsieb gekoppelt wird. Da in vielen Smartphones und / oder Tablets bereits standardmäßig eine Recheneinheit, eine Anzeigeeinrichtung und Sensoren verbaut sind, können die Smartphones und/oder Tablets vorteilhafterweise nur durch Ausstattung mit der zusätzlichen Software-Applikation und einer Anbringvorrichtung dazu verwendet werden, um die Schwingungsdaten zu erfassen und weiterzuverarbeiten.

Weiterhin ist es von Vorteil, wenn die Anbringvorrichtung an dem Gehäuse befestigt wird. So wird das Smartphone oder das Tablet mit der Recheneinheit und dem Sensor direkt an der Schwingmaschine, insbesondere Schwingförderer oder Schwingsieb fixiert, so dass keine Relativbewegung zwischen Schwingmaschine und Sensor möglich ist und der Sensor mit der Schwingmaschine mitschwingt. Die erfassten Daten können ohne zusätzliche Rechentransformation zur Analyse des Schwingverhaltens verwendet werden.

Im Rahmen der Erfindung nicht beansprucht wird ein Computerprogramm zum Ausführen von bestimmten Schritten, bei deren Ablauf auf einem Computersystem, wobei die Schritte wie folgt ausgestaltet sind: Erfassen von Bewegungs- und / oder Beschleunigungsrohdaten mit einem Sensor, Weiterleiten der Rohdaten an eine Recheneinheit, Weiterverarbeiten der Rohdaten in der Recheneinheit zu aufgearbeiteten Daten, Weiterleiten der aufgearbeiteten Daten an eine Anzeigeeinrichtung, und Ausgabe der aufgearbeiteten Daten mit einer Anzeigeeinrichtung. Diese Schritte sollen möglichst in dieser Reihenfolge ablaufen, obwohl auch eine andere Reihenfolge denkbar ist, beispielsweise ist ein paralleles Ablaufen von einzelnen Schritten möglich.

Dabei ist es von Vorteil, wenn in einem Schritt nach dem Weiterleiten der Rohdaten und / oder nach dem Weiterverarbeiten der Rohdaten diese auf einem Speichermedium gespeichert werden. Dadurch können die Daten archiviert werden und mit später gewonnenen Daten derselben Schwingmaschine oder mit Daten anderer Schwingmaschinen einfach verglichen werden. Auch lässt sich so die historische Entwicklung einer Schwingmaschine besser beurteilen.

Außerdem ist es zweckmäßig, wenn in einem Schritt die aufgearbeiteten Daten mit zeitlich zurückliegenden Daten mathematisch und / oder grafisch verglichen werden, was vorzugsweise eine Beurteilung über einen längeren Zeitraum ermöglicht und eine Abweichung vom Sollschwingverhalten herausstellt.

Auch werden die aufgearbeiteten Daten vorteilhafterweise in einem Schritt mit einer manuellen Eingabe von Daten mit Maschineninformation wie beispielsweise Standort, Datum und Typ verknüpft. So können die Daten auch zu einem späteren Zeitpunkt einer Schwingmaschine, insbesondere Schwingförderer oder Schwingsieb genau zugeordnet werden.

Bevorzugterweise werden die aufgearbeiteten Daten in einem Schritt optisch ausgegeben. Dadurch kann der Benutzer schnell beurteilen, ob das Schwingverhalten in Ordnung ist, ob es in einem kritischen Toleranzbereich liegt oder ob es nicht zulässig ist.

Die Erfindung kann bevorzugt als ein Schwingungsanalysegerät für eine Schwingmaschine, insbesondere einen Schwingförderer oder ein Schwingsieb, das eine Recheneinheit mit einer Kamera besitzt, ausgeführt sein. Dabei sind auf der mit der Recheneinheit verbundenen, optischen Anzeigeeinrichtung für den Nutzer Informationen darstellbar. Die Recheneinheit ist so eingerichtet, dass über einen Zeitverlauf gesehen von der Kamera erfasste Bildinformationen, die durch ein Filmen eines zum visuellen Erfassen vorbereiteten Zielobjekt, das an der Schwingmaschine, insbesondere Schwingförderer oder Schwingsieb befestigt ist, erhalten werden. Diese Bildinformationen werden so ausgewertete und an die Anzeigeeinrichtung weitergegeben, dass Informationen bezüglich der Schwingung der Schwingmaschine, insbesondere Schwingförderer oder Schwingsieb dargestellt werden.

Die Erfindung wird nachfolgend mit Hilfe einer Zeichnung erläutert. Es zeigen:
- Fig. 1: eine schematische Darstellung eines Schwingungsanalysegeräts in einem solchen Zustand, in dem eine Recheneinheit noch nicht in eine Hülle eingesetzt ist,
- Fig. 2: eine schematische Darstellung des Schwingungsanalysegeräts mit einer Sende- /Empfangseinheit zum Kommunizieren mit einem Peripheriegerät, und
- Fig. 3: eine Flussdiagramm-Darstellung eines Computerprogramms, das zum Ablaufen auf der Recheneinheit vorgesehen und eingerichtet ist.
- Fig. 4: eine schematische Darstellung einer Schwingmaschine, in Form eines Schwingsiebs mit einem Schwingungsanalysegerät.

Die Figuren sind lediglich schematischer Natur und dienen ausschließlich dem Verständnis der Erfindung. Die gleichen Elemente sind mit denselben Bezugszeichen versehen. Die Merkmale der einzelnen Ausführungsbeispiele können untereinander ausgetauscht werden.

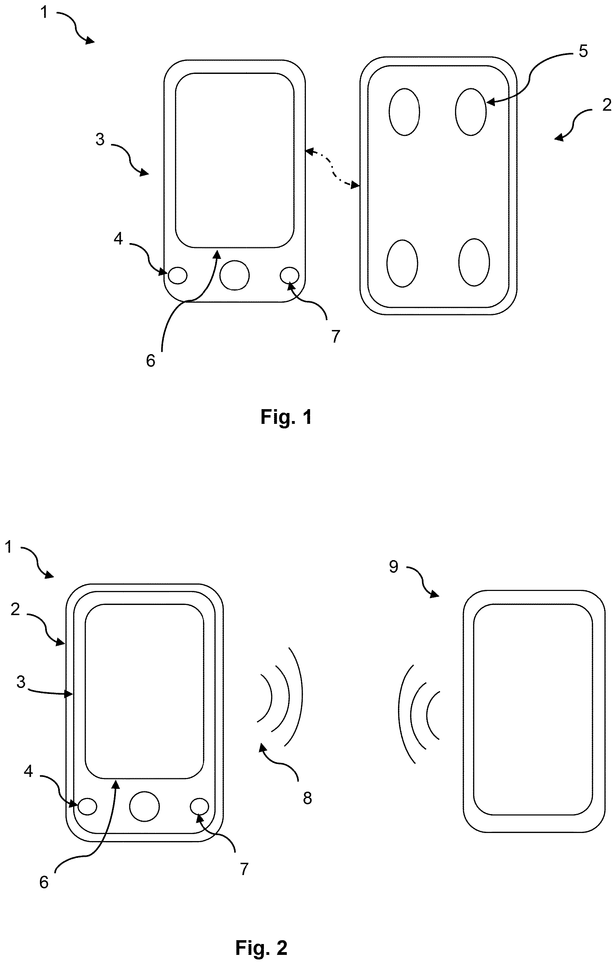

In Fig. 1 ist ein Schwingungsanalysegerät 1 dargestellt, das eine Anbringvorrichtung 2 besitzt, die mit einer Recheneinheit 3 gekoppelt ist. Die Recheneinheit 3 besitzt wenigstens einen Sensor 4, der zur Bewegungserfassung und / oder Beschleunigungserfassung ausgelegt ist. An der Anbringvorrichtung 2 ist zumindest ein Mittel 5 vorhanden, mit dem das Schwingungsanalysegerät 1 lösbar an einem Gehäuse einer nicht dargestellten Schwingmaschine, insbesondere Schwingförderer oder Schwingsieb befestigt wird. Auch ist eine optische Anzeigeeinrichtung 6 vorhanden, die entweder in die Recheneinheit 3 integriert oder von ihr separat ausgestaltet ist. Die Anzeigeeinrichtung 6 ist vorbereitet um von dem Sensor 4 erfasste und von der Recheneinheit 3 weiterverarbeitete Daten auszugeben.

Gemäß Fig. 1 ist die mit der Anbringvorrichtung 2 zu koppelnden Recheneinheit 3 des Schwingungsanalysegeräts 1 schematisch dargestellt. Die Recheneinheit 3 ist als herkömmliches Smartphone oder Tablet ausgebildet, die durch eine zusätzliche Software-Applikation, auch App genannt, dazu vorbereitet ist, um mit einem eingebauten Bewegungs- und / oder Beschleunigungssensor 4 mehrere Parameter eines Schwingungsverhaltens der Schwingmaschine, insbesondere Schwingförderer oder Schwingsieb zu erfassen, die erfassten Daten weiterzuverarbeiten und mit einer Anzeigeeinrichtung 6 optisch auszugeben.

Die Recheneinheit 3 kann mit einer Anbringvorrichtung 2 gekoppelt werden. Dabei ist die Anbringvorrichtung 2 gemäß Fig. 1 als Hülle ausgebildet, in die die Recheneinheit 3 eingesetzt werden kann. Die Anbringvorrichtung 2 ist vorzugsweise aus Silikon oder aus einem anderen elastischen Material hergestellt, so dass die Recheneinheit 3 in die vorzugsweise formschlüssige Hülle eingesetzt werden kann. Die Anbringvorrichtung 2 kann in anderen Ausführungsbeispielen beispielsweise auch als Gehäuse oder (Winkel-)Platte ausgebildet sein.

In der Anbringvorrichtung 2 sind wie in Fig. 1 dargestellt Mittel 5 vorhanden, die über ihre magnetische Anziehungskraft an dem Schwingmaschine, insbesondere Schwingförderer oder Schwingsiebgehäuse befestigt werden. Die Mittel 5 sind in den Ecken der Anbringvorrichtung 2 angeordnet. Eine magnetische Anbringung bietet den Vorteil, dass sie an den meisten Metallen ohne zusätzliche Befestigung haftet und besonders einfach lösbar ist. Die Mittel 5 der Anbringvorrichtung 2 können in einem anderen Ausführungsbeispiel auch als Klemmvorrichtung oder Klebevorrichtung ausgebildet sein.

Gemäß Fig. 1 ist die Anzeigeeinrichtung 6 in die Recheneinheit 3 integriert und ist vorbereitet, um die erfassten und weiterverarbeiteten Daten optisch auszugeben. Es können ein Winkel der Hauptschwingrichtung, ein zurückgelegter Weg der Schwingmaschine, insbesondere Schwingförderer oder Schwingsieb, eine Geschwindigkeit, eine Beschleunigung, eine Schwingfrequenz, eine Abweichung von einer Soll-Schwingrichtung und/oder ein Bild eines Schwingungsverlaufs über die Zeit auf der Anzeigeeinrichtung 6 dargestellt werden. Die Schwingungsparameter werden je nach Einstellung in der Applikation in Abhängigkeit der x-, y- und z-Achse eines kartesischen Koordinatensystems getrennt voneinander oder als resultierender Vektor ausgegeben.

Zusätzlich besitzt die Recheneinheit 3 einen Temperatursensor 7 gemäß Fig. 1, der zur Erfassung der Umgebungstemperatur ausgelegt ist. Die vom Temperatursensor 7 erfassten Daten können in der Applikation für die Schwingungsanalyse oder in einer separaten Applikation oder Verarbeitungs- / Ausgabeeinheit verarbeitet und/oder ausgegeben werden.

Wie in Fig. 2 dargestellt ist in der Recheneinheit 3 eine Sende- / Empfangseinheit 8 vorhanden, die vorzugsweise über Bluetooth, LAN oder WLAN mit einem oder mehreren Peripheriegeräten 9 kommunizieren kann. In dem Peripheriegerät können beispielsweise die Schwingungsinformationen angezeigt, mit anderen Messdaten synchronisiert oder gespeichert werden.

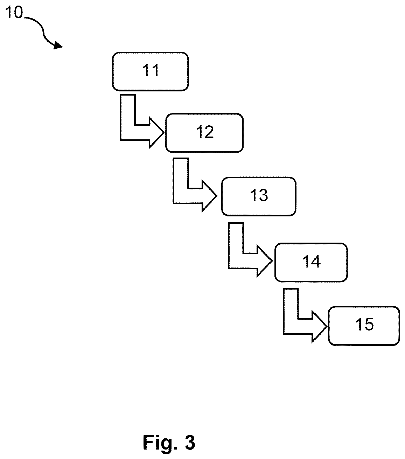

Fig. 3 zeigt ein Computerprogramm 10, das mehrere Schritte nacheinander ausführt. In einem ersten Schritt 11 werden Bewegungs- und/ oder Beschleunigungsrohdaten mit einem Sensor 4 erfasst. In einem zeitlich nachgelagerten, zweiten Schritt 12 werden die Rohdaten an eine Recheneinheit 3 weitergeleitet. Alternativ dazu könnten die Rohdaten zunächst auch gespeichert werden bevor sie an die Recheneinheit 3 weitergeleitet werden. Dann werden die Rohdaten in einem dritten Schritt 13 in der Recheneinheit 3 zu aufgearbeiteten Daten weiterverarbeitet. Danach werden die aufgearbeiteten Daten in einem vierten Schritt 14 an eine Anzeigeeinrichtung 6 weitergeleitet. Auch hier könnten die weiterverarbeiteten Daten alternativ zunächst gespeichert werden bevor sie an die Anzeigeeinrichtung 6 weitergeleitet werden. In einem fünften Schritt 15 werden die aufgearbeiteten Daten mit einer Anzeigeeinrichtung 6 optisch ausgegeben.

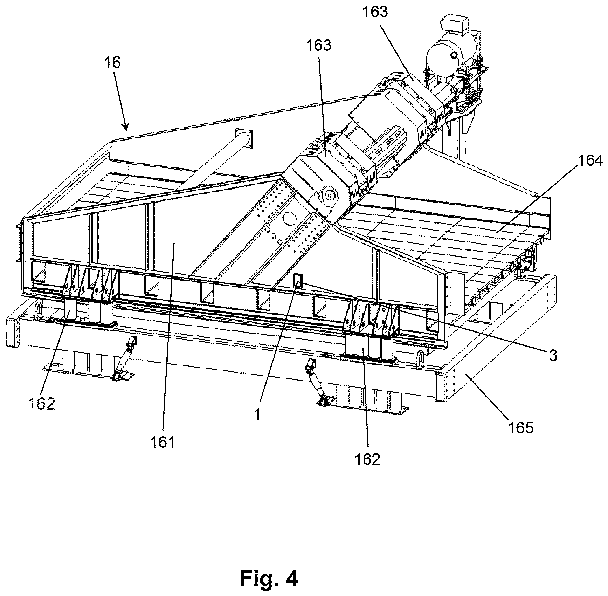

Fig. 4 zeigt eine mögliche Ausführungsform einer Schwingmaschine 16, in Form eines Schwingsiebs, bei der das Schwingungsanalysegerät 1 zum Einsatz kommen kann.

Schwingsiebe dienen dazu, Schüttgut unterschiedlicher Größe zu sieben, zu trennen und/oder zu fördern. Die Schwingmaschine 16 umfasst ein Siebdeck 164, auf dem sich Siebbeläge mit vorbestimmten Öffnungen befinden, durch die das kleinere Schüttgutmaterial hindurchfällt, während das größere Material auf dem Siebdeck 164 verbleibt. Die Schwingmaschine 16 ist an ihren vier Ecken auf Stahlfedern 162 gelagert und auf einem Isolierrahmen 165 befestigt. Die Schwingmaschine 16 wird von einem Schwingungserreger 163 mit exzentrisch angeordneten Gewichten in Bewegung versetzt. Dabei kann das Schwingsieb mit bis zu 1000 Umdrehungen pro Minute und mit einer Belastung von über dem fünffachen der g-Kraft (5g) schwingen.

Aufgrund dieser Belastung ist die Aufzeichnung und Auswertung von Schwingungen einer derartigen Schwingmaschine 16 eine Herausforderung, die Expertenwissen erfordert.

Das Schwingungsanalysegerät 1 ist bevorzugt an einer Seitenwange 161 einer Schwingmaschine 16 lösbar angebracht. Damit kann speziell für diese Punkte deren Weg, die Geschwindigkeit oder Beschleunigung, die Schwingfrequenz, der Winkel der Hauptschwingrichtung oder ein Bild des Schwingungsverlaufs über die Zeit dargestellt werden. Eine Ermittlung dieser Kenngrößen an allen vier Ecken der Schwingmaschine erlaubt anschließend eine Analyse des Schwingverhaltens der gesamten Schwingmaschine.

### Bezugszeichenliste

- 1: Schwingungsanalysegerät
- 2: Anbringvorrichtung
- 3: Recheneinheit
- 4: Sensor
- 5: Mittel
- 6: Anzeigeeinrichtung
- 7: Temperatursensor
- 8: Sende- / Empfangseinheit
- 9: Peripheriegerät
- 10: Computerprogramm
- 11: erster Schritt
- 12: zweiter Schritt
- 13: dritter Schritt
- 14: vierter Schritt
- 15: fünfter Schritt
- 16: Schwingmaschine
- 161: Seitenwange
- 162: Stahlfeder
- 163: Schwingungserreger
- 164: Siebdeck
- 165: Isolierrahmen

## Patentansprüche

1. System, welches eine Recheneinheit (3) und ein Schwingungsanalysegerät (1) mit einer Anbringvorrichtung (2) umfasst, wobei die Anbringvorrichtung (2) zumindest ein Mittel (5) besitzt, um lösbar an einem Gehäuse einer Schwingmaschine (16), insbesondere eines Schwingförderers oder Schwingsiebs, befestigt zu werden,
- wobei das Schwingungsanalysegerät (1) mit der Recheneinheit (3) gekoppelt ist und
- die Recheneinheit (3) wenigstens einen zur Bewegungserfassung und / oder Beschleunigungserfassung ausgelegten Sensor (4) besitzt,
- wobei eine optische Anzeigeeinrichtung (6) vorhanden ist, die vorbereitet ist, die von der Recheneinheit (3) weiterverarbeiteten Daten auszugeben, **dadurch gekennzeichnet, dass**
- der Sensor (4) zur automatischen Berechnung einer horizontalen Bezugsebene und
- zur Darstellung von Schwingungen der Schwingmaschine (16) in Relation zur horizontalen Bezugsebene und/oder in Relation zu der Ebene, in der der Sensor angebracht wird, vorgesehen ist.

2. System nach Anspruch 1, **dadurch gekennzeichnet, dass** der Sensor (4) zum Erfassen wenigstens eines Parameters aus der Gruppe: Bewegungsrichtung, Position, Geschwindigkeit, Beschleunigung, Beschleunigungsamplitude, Schwingweite, Betriebsdrehzahl und Weg der Schwingmaschine ausgelegt ist.

3. Verfahren zum Anzeigen schwingungsbedingter Ausgabeinformationen für eine Analyse des Verhaltens einer Schwingmaschine (16), insbesondere eines Schwingförderer oder Schwingsiebs,
- wobei ein zur Bewegungserfassung und / oder Beschleunigungserfassung ausgelegter Sensor (4) über eine Anbringvorrichtung (2) an einem Gehäuse der Schwingmaschine (16), insbesondere des Schwingförderers oder Schwingsiebs lösbar befestigt wird,
- wobei der Sensor (4) Daten erfasst, die in einer mit dem Sensor (4) verbundenen Recheneinheit (3) weiterverarbeitet werden,
- wobei die weiterverarbeiteten Daten in einer Anzeigeeinrichtung (6) ausgegeben werden,
- wobei die Ausgabe durch die Anzeigeeinrichtung (6) eine grafische oder numerische Darstellung eines Schwingungsverlaufs über die Zeit, eines Winkels einer Hauptschwingungsrichtung, eines zurückgelegten Wegs der Schwingmaschine (16), einer Beschleunigung, einer Schwingfrequenz und/ oder einer Abweichung von einer Soll-Schwingungsrichtung der Schwingmaschine ist,
**dadurch gekennzeichnet, dass**
- der Sensor (4) eine horizontale Bezugsebene berechnet und Schwingungen der Schwingmaschine (16) in Relation zu der horizontale Bezugsebene und/oder in Relation zu der Ebene, in der der Sensor (4) angebracht ist, darstellt.

4. Verfahren gemäß Anspruch 3, **dadurch gekennzeichnet, dass** die vom Sensor (4) erfassten Daten oder die von der Recheneinheit (3) verarbeiteten Daten gespeichert werden.

5. Verfahren gemäß Anspruch 3 oder 4, **dadurch gekennzeichnet, dass** die verarbeiteten Daten mit einer manuellen Eingabe von Daten mit Maschineninformation, vorzugsweise Standort, Datum und Typ, verknüpft werden.

6. Verfahren gemäß einem der vorhergehenden Ansprüche 3 bis 5, **dadurch gekennzeichnet, dass** die Recheneinheit (3) konfiguriert ist, um ein Schwingungsverhalten der Schwingmaschine (16) basierend auf den Sensordaten zu beurteilen, in der Form, ob deren Schwingungsverhalten einem Sollwertverhalten entspricht oder davon abweicht.

## Claims

1. System which comprises a computer unit (3) and a vibration analysis device (1) with an attachment apparatus (2), wherein the attachment apparatus (2) has at least one means (5) in order to be detachably fastened to a housing of a vibration machine (16), in particular a vibrating conveyor or a vibrating screen,
- wherein the vibration analysis device (1) is coupled to the computer unit (3) and
- the computer unit (3) has at least one sensor (4) designed for detecting movement and/or for detecting acceleration,
- wherein there is an optical display device (6), which is set up to output the data processed further by the computer unit (3), **characterized in that**
- the sensor (4) is provided for automatically calculating a horizontal reference plane and
- for representing vibrations of the vibration machine (16) in relation to the horizontal reference plane and/or in relation to the plane in which the sensor is attached.

2. System according to claim 1, **characterized in that** the sensor (4) is designed to detect at least one parameter from the group: movement direction, position, speed, acceleration, acceleration amplitude, vibration amplitude, operating speed and travel of the vibration machine.

3. Method for displaying vibration-related output information for an analysis of the behaviour of a vibration machine (16), in particular a vibrating conveyor or a vibrating screen,
- wherein a sensor (4) designed for detecting movement and/or for detecting acceleration is detachably fastened to a housing of the vibration machine (16), in particular the vibrating conveyor or vibrating screen, via an attachment apparatus (2),
- wherein the sensor (4) detects data, which are processed further in a computer unit (3) connected to the sensor (4),
- wherein the further-processed data are output in a display device (6),
- wherein the output by the display device (6) is a graphical or numerical representation of a vibration curve over time, an angle of a main vibration direction, a travel of the vibration machine (16), an acceleration, a vibration frequency and/or a deviation from a target vibration direction of the vibration machine,
**characterized in that**
- the sensor (4) calculates a horizontal reference plane and represents vibrations of the vibration machine (16) in relation to the horizontal reference plane and/or in relation to the plane in which the sensor (4) is attached.

4. Method according to claim 3, **characterized in that** the data detected by the sensor (4) or the data processed by the computer unit (3) are stored.

5. Method according to claim 3 or 4, **characterized in that** the processed data are linked to a manual input of data with machine information, preferably location, date and model.

6. Method according to one of the preceding claims 3 to 5, **characterized in that** the computer unit (3) is configured to assess a vibration behaviour of the vibration machine (16) on the basis of the sensor data, in the form of whether its vibration behaviour corresponds to or deviates from a setpoint behaviour.

## Revendications

1. Système qui comprend une unité de calcul (3) et un appareil d'analyse de vibrations (1) avec un dispositif de fixation (2), le dispositif de fixation (2) comprenant au moins un moyen (5) pour pouvoir être fixé de façon amovible sur un boîtier d'une machine à vibrations (16), notamment d'un transporteur à vibrations ou d'un tamis à vibrations,
- l'appareil d'analyse de vibrations (1) étant relié à l'unité de calcul (3) et
- l'unité de calcul (3) ayant au moins un capteur (4) configuré pour capter un mouvement et/ou pour capter une accélération,
- un dispositif d'affichage optique (6) étant présent qui est préparé pour éditer les données traitées par l'unité de calcul (3),
**caractérisé en ce que**
- le capteur (4) est prévu pour le calcul automatique d'un plan de référence horizontal et
- pour la représentation de vibrations de la machine à vibrations (16) par rapport au plan de référence horizontal et/ou par rapport au plan sur lequel le capteur est monté.

2. Système selon la revendication 1, **caractérisé en ce que** le capteur (4) est configuré pour capter au moins un paramètre du groupe : direction de mouvement, position, vitesse, accélération, amplitude d'accélération, amplitude de vibration, nombre de tours en fonctionnement et parcours de la machine à vibrations.

3. Procédé d'affichage d'informations de sortie dépendantes de vibrations, pour une analyse du comportement d'une machine à vibrations (16), notamment d'un transporteur à vibrations ou d'un tamis à vibrations,
- un capteur (4) configuré pour capter un mouvement et/ou une accélération étant fixé de façon amovible, moyennant un dispositif de fixation (2), sur un boîtier d'une machine à vibrations (16), notamment d'un transporteur à vibrations ou d'un tamis à vibrations,
- le capteur (4) captant des données qui sont traitées dans une unité de calcul (3) reliée au capteur (4),
- les données traitées étant éditées dans un dispositif d'affichage (6),
- l'affichage par le dispositif d'affichage (6) étant une représentation graphique ou digitale d'un déroulement de vibrations dans le temps, d'un angle d'une direction principale de vibrations, d'un parcours de la machine à vibrations (16), d'une accélération, d'une fréquence de vibrations et/ou d'un écart d'une direction de référence de vibrations de la machine à vibrations,
**caractérisé en ce que**
- le capteur (4) calcule un plan de référence horizontal et représente des vibrations de la machine à vibration (16) par rapport au plan de référence horizontal et/ou par rapport à un plan sur lequel le capteur (4) est monté.

4. Procédé selon la revendication 3, **caractérisé en ce que** les données captées par le capteur (4) ou les données traitées par l'unité de calcul (3) sont enregistrées.

5. Procédé selon la revendication 3 ou 4, **caractérisé en ce que** les données traitées sont associées à une entrée manuelle de données avec informations de machine, de préférence lieu d'installation, date et type.

6. Procédé selon l'une des revendications précédentes 3 à 5, **caractérisé en ce que** l'unité de calcul (3) est configurée pour évaluer un comportement de vibrations de la machine à vibrations (16) sur la base des données du capteur, sous la forme de savoir si le comportement de celle-ci correspond à un comportement de référence ou s'il en diffère.
